# EUROPEAN PATENT APPLICATION

(11) **EP 1 933 491 A2**
(43) Date of publication of application: **18.06.2008**
(21) Application number: 07121161.9
(22) Date of filing: 20.11.2007
(51) Int. Cl.: H04L 1/00

(54) **Serial transmission system, a method for automatically correcting signal quality of serial transmission system, and port**

(30) Priority: 12.12.2006 JP 2006334494
(71) Applicant: Fujitsu Ltd., Kawasaki-shi, Kanagawa 211-8588 (JP)
(72) Inventor: Kawamoto, Masakazu, Kawasaki-shi, Kanagawa 211-8588 (JP)
(74) Representative: Wilding, Frances Ward

(57) **Abstract**

A serial transmission system performs data transfer between a first port and a second port via a transmission path. The first port includes a receiving unit that receives data , a signal-quality measuring unit that measures the signal quality of receive data, a correction-request-data generating unit that generates correction request data for correcting output characteristics of the second port on the basis of a result of the measurement, and a sending unit that sends the generated correction request data. The second port includes a sending unit that sends data, a receiving unit that receives the correction request data from the first port, and a setting unit that changes settings of output characteristics of the sending unit on the basis of the received correction request data.

## Description

### BACKGROUND OF THE INVENTION

### 1. Field of the Invention

The present invention relates to a serial transmission system in which mismatch in electrical characteristics in a transmission system in, for example, a magnetic disk drive is dynamically detected by a signal receiving device, and a correction is made for a signal sending device by sending information on the mismatch to the signal sending device.

### 2. Description of the Related Art

Recently, high-speed data transfer and extension of connection distance have been required in interfaces of storage units connected to servers as the amount of data handled by servers has increased. Thus, instead of the known Small Computer System Interface (SCSI), fibre channels have been increasingly adopted in server systems and the like. The Fibre Channel standard is developed by the T11 Committee of the American National Standards Institute (ANSI). In fibre channels, the maximum transmission distance of 10 km and high-speed data transfer over a long distance are achieved by using optical fibres or coaxial cables, the maximum transfer rate of which is 200 MB/s, for connection. Moreover, connection modes include the point-to-point mode, in which a server and a storage are connected in one-to-one correspondence, the Fibre Channel Arbitrated Loop (FC-AL) mode, in which a server and a storage are connected in a loop, and the fabric mode, in which a server and a storage are connected via a fibre channel switch. Then, in order to ensure the quality of transfer in a fibre channel, the characteristics of a sending transceiver are measured in advance in a constant environment, and the setting values in the transceiver are determined so that the signal characteristics conform to the standard. These values are set and fixed when a device is installed, and the fixed values are used. The setting values are changed by changing firmware or tables when the device is deactivated. Such setting is influenced by a change in the cable length. Thus, a method is proposed in Japanese Unexamined Patent Application Publication No. 2005-50257, in which the output signal level is automatically adjusted even in different operational environments in which cable lengths are different.

In the method disclosed in Japanese Unexamined Patent Application Publication No. 2005-50257, the amplitude of a receive signal of a certain port is compared with the standard level to control the amplitude of a send signal of the port. That is to say, the amplitude of a signal sending system that is different from a signal receiving system is controlled using the level of the signal receiving system. Thus, in a case where the level of a send signal of a port is reduced (negative feedback) because the level of a receive signal is higher than the standard level, even the level of the sending system of the port is already below the standard level, the level of the sending system is further reduced. As a result, a port at the other end increases the signal level, thereby resulting in latch-up. This is because it is assumed that two independent signal transmission systems operate in the same manner.

It is desirable to provide a serial transmission system and a port in which receive signals are automatically corrected.

### SUMMARY OF THE INVENTION

A serial transmission system according to embodiments of an aspect of the present invention includes a first port and a second port. Serial data is transferred between the first port and the second port via a transmission path. The first port includes a receiving unit that receives data, a signal-quality measuring unit that measures signal quality of receive data, a correction-request-data generating unit that generates correction request data for correcting output characteristics of the second port on the basis of a result of the measurement, and a sending unit that sends the generated correction request data. The second port includes a sending unit that sends data, a receiving unit that receives the correction request data from the first port, and a setting unit that changes settings of output characteristics of the sending unit on the basis of the received correction request data.

A port according to embodiments of another aspect of the present invention that sends and receives data to and from another port via a transmission path is provided. The port includes a receiving unit that receives data from the other port, a signal-quality measuring unit that measures signal quality of receive data, a correction-request-data generating unit that generates correction request data on the basis of a result of the measurement, a sending unit that sends data to the other port, and a setting unit that changes settings of output characteristics of the sending unit on the basis of the correction request data received from the other port.

Preferred features of the present invention will now be described, purely by way of example, with reference to the accompanying drawings, in which:-
Fig. 1 shows the principle of a serial transmission system;
Fig. 2 is a block diagram of a serial transmission system;
Fig. 3 shows a table;
Fig. 4 shows the structure of correction request data;
Fig. 5 shows a loop serial transmission system;
Fig. 6 is a flowchart of a correction process in a port B;
Fig. 7 is a flowchart of a first half of a correction process in port A;
Fig. 8 is a flowchart of a second half of the correction process in the port A;
Fig. 9 is a flowchart of a threshold-value process 1;
Fig. 10 is a flowchart of a process 1;
Fig. 11 is a flowchart of a process 2;
Fig. 12 is a flowchart of a threshold-value process 2;
Fig. 13 is a flowchart of a process 3;
Fig. 14 is a flowchart of a process 4; and
Fig. 15 is a block diagram of a server system.

### DESCRIPTION OF THE PREFERRED EMBODIMENTS

The principle of the present invention will now be described before embodiments of the present invention are described.

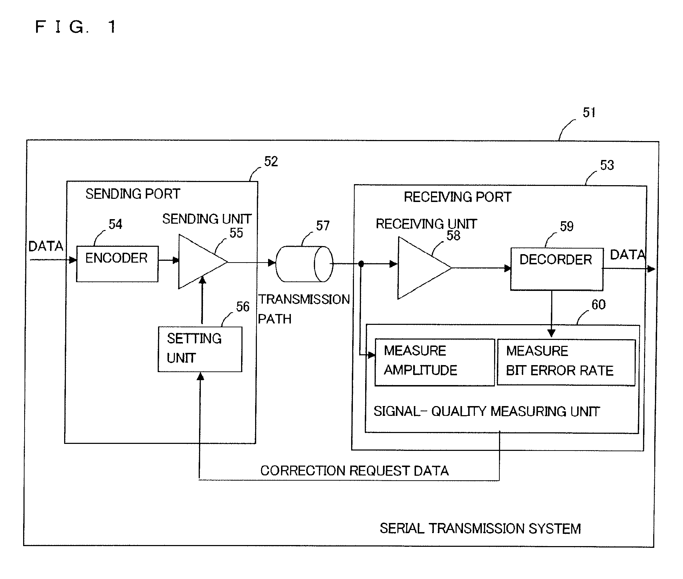

Fig. 1 shows the principle of a serial transmission system. A serial transmission system 51 includes a sending port 52 and a receiving port 53. The sending port 52 encodes input data with an encoder 54 and sends the encoded data from a sending unit 55 via a transmission path 57. The receiving port 53 receives data from the sending port 52 with a receiving unit 58. A signal-quality measuring unit 60 measures the amplitude of a signal input to the receiving unit 58 to measure the signal quality. The signal-quality measuring unit 60 further measures the bit error rate to measure the signal quality while the receive data is decoded by a decoder 59, and the decoded data is output. Then, the signal-quality measuring unit 60 sends a correction request to the sending port 52 on the basis of the results of measurement. A setting unit 56 in the sending port 52 changes the setting of the output characteristics of the sending unit 55 on the basis of the correction request. As a result, transmission signals between the sending port 52 and the receiving port 53 can be automatically corrected.

That is to say, when the signal quality is lower than a predetermined level, the receiving port 53 on the receiving side can change the output characteristics of the sending port 52 on the sending side by sending correction request data, so that the quality of signals between the ports can be automatically adjusted.

### Embodiments

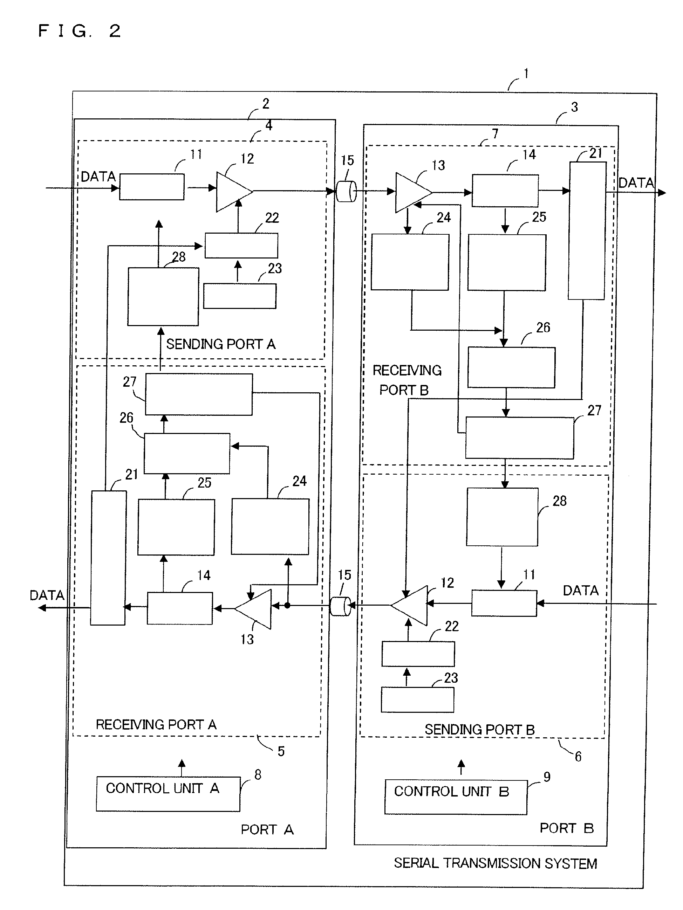

Fig. 2 is a block diagram of a serial transmission system. A serial transmission system 1 includes ports A2 and B3. The serial transmission system 1 is an example of an opposed serial transmission system in which the ports A2 and B3 are connected in one-to-one correspondence. In the serial transmission system 1, a transmission mode for fibre channels is used.

The port A2 includes a sending port A4, a receiving port A5, and a control unit A8. The port A2 changes the output characteristics of a sending unit 12 in the sending port A4 upon receiving correction request data from the port B3. The port A2 further outputs input data to a transmission path 15 as serial data. The port A2 further outputs receive data other than correction request data from the transmission path 15. The port A2 further measures the signal quality upon receiving data to determine whether correction is necessary. When correction is necessary, the port A2 sends correction request data to the port B3. The port B3 includes a sending port B6, a receiving port B7, and a control unit B9. The port B3 measures the signal quality upon receiving data to determine whether correction is necessary. When correction is necessary, the port B3 sends correction request data to the port A2. The port B3 further changes the output characteristics of the sending unit 12 in the sending port B6 upon receiving correction request data from the port A2. The port B3 further outputs input data to the transmission path 15 as serial data. The port B3 further outputs receive data other than correction request data from the transmission path 15.

The sending ports A4 and B6 each include an encoder 11, the sending unit 12, a setting unit 22, a memory 23, and a transmission processing unit 28.

The receiving ports A5 and B7 each include a receiving unit 13, a decoder 14, a data determining unit 21, an amplitude measuring unit 24, a bit-error-rate (BER) measuring unit 25, a signal-quality determining unit 26, and a correction-request-data generating unit 27.

The control units A8 and B9 control the protocol according to the Fibre Channel standard.

The encoder 11 converts 8-bit send data to 10-bit data. The sending unit 12 converts data to differential electrical signals. The output characteristics can be changed with the setting unit 22. The sending unit 12 has an interface that can change the amplitude characteristics, preemphasis, the output impedance, and the like. The receiving unit 13 coverts receive electrical signals to data. The decoder 14 converts 10-bit receive data to 8-bit data. The data determining unit 21 determines whether the receive data is correction request data. When the receive data is correction request data, the data determining unit 21 transfers the correction request data to the setting unit 22. When the setting unit 22 has received correction request data from the data determining unit 21, the setting unit 22 reads setup data corresponding to the correction request data from the memory 23 and sets the output characteristics of the sending unit 12. The memory 23 stores a table of output characteristics corresponding to correction request data from the port B3. The memory 23 further stores the histories of entry values of output characteristics that are set for the sending unit 12 and the optimum value.

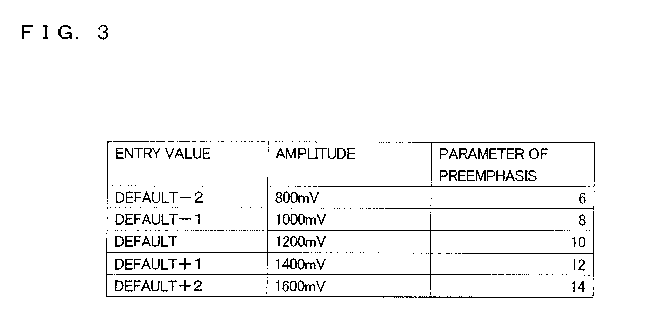

Fig. 3 shows the table. The table includes amplitudes and parameters of preemphasis corresponding to entry values. Preemphasis means emphasizing high frequency components that are expected to be attenuated. Entry values include, for example, an initial value (an amplitude 1200 mV, data of preemphasis 10) that is the center value and the initial value + 1 (an amplitude 1400 mV, data of preemphasis 12) and the initial value + 2 (an amplitude 1600 mV, data of preemphasis 14) that represent a positive correction direction. The positive correction direction is a direction in which the amplitude and the level of preemphasis are increased. Entry values further include the initial value - 1 (an amplitude 1000 mV, data of preemphasis 8) and the initial value - 2 (an amplitude 800 mV, data of preemphasis 6) that represent a negative correction direction. The negative correction direction is a direction in which the amplitude and the level of preemphasis are decreased. Amplitudes and parameters of preemphasis corresponding to entry values are defined in this way.

In this embodiment, the amplitude measuring unit 24 and the BER measuring unit 25 are used as the signal-quality measuring unit 60. The amplitude measuring unit 24 measures and stores the amplitude of a receive signal. The measurement process is as follows: An input signal is directed to a comparator other than the receiving unit 13, and the comparator compares the peak-to-peak value of the amplitude of the input signal with the minimum input specification of the receiving unit 13. For example, when the minimum input specification of the receiving unit 13 is 200 mV, this value is set as a reference. This is because, the lower the signal level, the less the influence of crosstalk, reflection, or the like, and thus, jitter also decreases, so that the quality can be improved. When the peak-to-peak value of the amplitude of the input signal is less than the reference value, a logical zero is output. When the peak-to-peak value of the amplitude of the input signal is equal to or more than the reference value, a logical one is output.

The BER measuring unit 25 measures and stores the BER of frame data. The BER measuring unit 25 has a detection function of detecting a bit string that does not correspond to 8-10 bit conversion and a detection function of detecting cyclic redundancy check (CRC) errors of frame data as functions of measuring the BER.

When a value measured by the BER measuring unit 25 exceeds 10 raised to the negative 13th power, the signal-quality determining unit 26 determines that an error has occurred. When a value measured by the BER measuring unit 25 is equal to or less than 10 raised to the negative 13th power, the signal-quality determining unit 26 determines that the status is normal. When the BER reaches a normal value during automatic adjustment, it is determined that correction has been completed. Since the size of frame data is about 2 kB, frame data needs to be checked about 6 x (10 raised to the 8th power) times. The signal-quality determining unit 26 further determines whether the peak output value measured by the amplitude measuring unit 24 is 200 mV. That is to say, when the output from the comparator is a logical zero, this indicates that it is detected that the amplitude of a receive signal is less than 200 mV. In this case, the signal-quality determining unit 26 determines that correction is necessary. On the other hand, when the output from the comparator is a logical one, this indicates that it is detected that the amplitude of a receive signal is equal to or more than 200 mV. In this case, the signal-quality determining unit 26 determines that correction is necessary. In the case of the receiving ports B7 and A5, which can detect only an amplitude, the amplitude is adjusted to the minimum input specification 200 mV of the receiving unit 13. Thus, when the output is changed from a logical zero to a logical one or when the output is changed from a logical one to a logical zero, the signal-quality determining unit 26 determines that correction has been completed. In the case of the receiving ports B7 and A5, which can detect an amplitude and a BER, the signal quality is automatically adjusted on the basis of the BER. Thus, the amplitude is used to determine the correction procedure.

The correction-request-data generating unit 27 generates correction request data on the basis of the result of determination by the signal-quality determining unit 26. The transmission processing unit 28 sends correction request data from the sending unit 12.

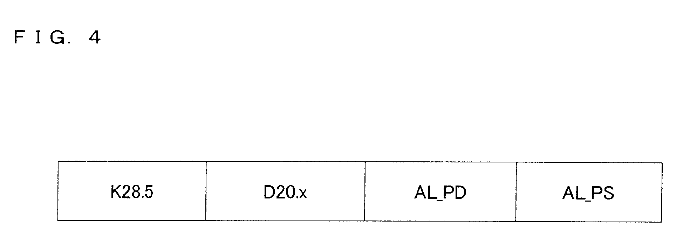

Fig. 4 shows the structure of correction request data. The structure of an Arbitrate primitive signal of a loop ordered set according to the Fibre Channel standard is extended, and the extended structure is used as the structure of correction request data. This primitive signal is also used for one-to-one connection. The primitive signal of 40 bits includes K28.5, D20.x, Arbitrated Port Destination Address (AL_PD), and Arbitrated Port Source Address (AL_PS), each of which occupying 10 bits. K28.5 indicates the first code of the primitive signal. In the Fibre Channel standard, D20.4 (i.e., the suffix x of D20.x is 4) is defined for Arbitrate. In this embodiment, this standard is extended, and x = 0, 1, 5 to 7 are defined as follows: x = 0 indicates starting of correction, x = 1 indicates completion of correction, x = 5 indicates positive correction (correction is performed such that the amplitude and the level of preemphasis are increased), x = 6 indicates negative correction (correction is performed such that the amplitude and the level of preemphasis are decreased), and x = 7 indicates reset of correction (the parameters are reset). AL_PD is a destination address used in the case of a loop topology and is not used in the case of one-to-one connection. AL_PS is a source address used in the case of a loop topology and is not used in the case of one-to-one connection. The structure of correction request data can be implemented via definitions in a header or an optional header in the frame structure according to the Fibre Channel standard instead of definitions in the primitive signal.

The overall operation of the serial transmission system 1 shown in Fig. 2 will now be described. Examples will be described, in which data is sent from the port A2 to the port B3, a receive signal is checked, and correction is made for the sending unit 12 in the port A2.

The port B3 of a first type can measure the amplitude of receive data and the BER of frame data. In this case, the BER of frame data is measured. When the BER exceeds a threshold value, it is determined that correction is necessary, so that correction request data is sent to the port A2 to change the output characteristics of the sending unit 12 in the sending port A4. The content of correction request data is determined on the basis of the amplitude of receive data. That is to say, when the amplitude is less than a predetermined value, correction request data for positive correction in which the amplitude and the like are increased is sent. On the other hand, when the amplitude exceeds the predetermined value, correction request data for negative correction in which the amplitude and the like are decreased is sent. Then, in a case where positive correction is first started, when the BER, which indicates the signal quality, is not reduced to the threshold value or less even by performing further positive correction, correction is continued using correction request data for negative correction instead of correction request data for positive correction. In contrast, in a case where negative correction is first started, when the BER, which indicates the signal quality, is not reduced to the threshold value or less even by performing further negative correction, correction is continued using correction request data for positive correction instead of correction request data for negative correction. When the signal quality has reached a predetermined level as a result of the correction, correction request data for completing correction is sent. In contrast, when the signal quality has not reached the predetermined level as a result of the correction, correction request data for resetting correction is sent to reset the output characteristics of the sending unit 12 in the sending port A4 to the initial values.

The port B3 of a second type can measure only the amplitude of receive data. In this case, the amplitude of a receive signal is measured to determine whether the amplitude is more or less than a predetermined value. When the amplitude is less than the predetermined value, correction request data for positive correction is sent. In contrast, when the amplitude is more than the predetermined value, correction request data for negative correction is sent. Then, when the output is changed from a logical zero to a logical one or when the output is changed from a logical one to a logical zero as a result of the correction, it is determined that the signal quality has reached a predetermined level, so that correction request data for completing correction is sent. In contrast, when the signal quality has not reached the predetermined level as a result of the correction, correction request data for resetting correction is sent to reset the output characteristics of the sending unit 12 to the initial values.

On the other hand, the port A2 obtains correction data corresponding to correction request data from the table and sets the data in the sending unit 12 in the sending port A4. Then, when correction has been successfully completed, the port A2 stores an entry value that is used for the correction as the optimum value so that the port A2 can operate with the parameter even when the power is turned off and on.

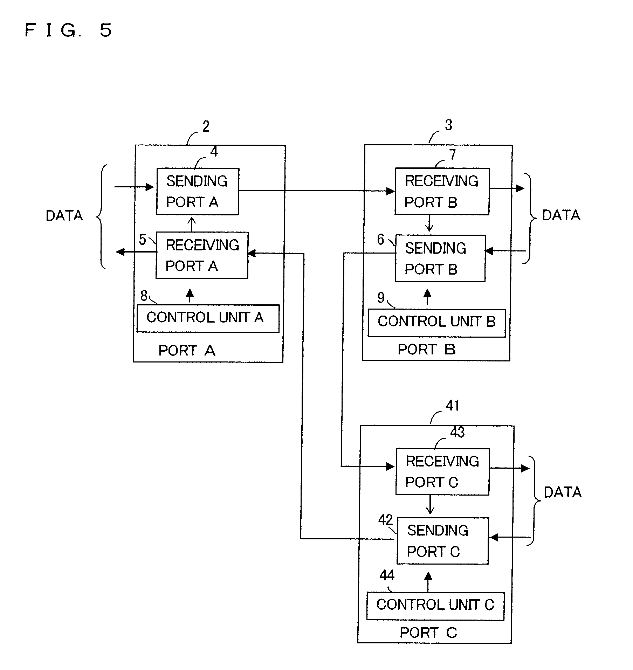

Fig. 5 shows a loop serial transmission system. In this example, the port A2, the port B3, and a port C41 are connected in a loop. The functions of the individual ports are the same. In this system, the output characteristics of the sending port A4 in the port A2 can be corrected with correction request data from the port B3. Since the destination address of the correction request data is the port A2, the correction request data reaches the port A2 thorough the port C41. Moreover, in this system, the output characteristics of the sending port B6 in the port B3 can be corrected with correction request data from the port C41. Since the destination address of the correction request data is the port B3, the correction request data reaches the port B3 thorough the port A2. Moreover, in this system, the output characteristics of a sending port C42 in the port C41 can be corrected with correction request data from the port A2. Since the destination address of the correction request data is the port C41, the correction request data reaches the port C41 thorough the port B3.

The detailed process in an example in which the quality of data signals from the port A2 to the port B3 in the serial transmission system 1 shown in Fig. 2 is corrected will now be described.

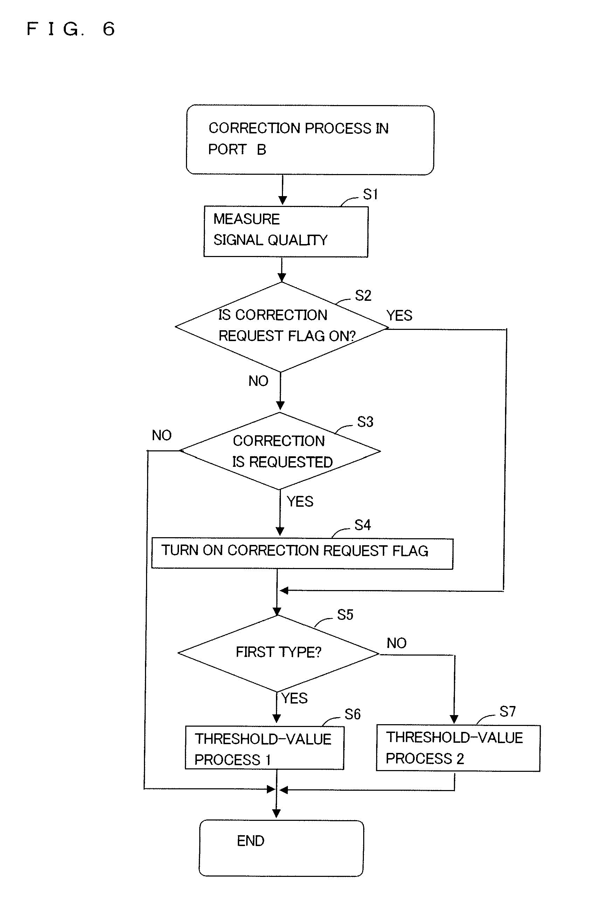

Fig. 6 is a flowchart of a correction process of in the port B3.

In step S1, the receiving port B7 in the port B3 measures the signal quality in service, for example, signal amplitudes and BERs per unit amount of transfer data. For example, the measurement is started upon receiving frame data at predetermined intervals. In step S2, it is determined whether a correction request flag is on. When the correction request flag is on, the process proceeds to step S5. When the correction request flag is off, the process proceeds to step S3. In step S3, it is determined on the basis of the measurement data whether correction should be requested. The port B3 of the first type can measure the amplitude of receive data and the BER of frame data. In this case, it is determined whether the BER exceeds a predetermined threshold value. When the BER is less than the threshold value, a predetermined signal quality is achieved. Thus, the process is completed. When the BER is equal to or more than the threshold value, correction is necessary. On the other hand, the port B3 of the second type can measure only the amplitude of receive data. In this case, it is determined that correction is necessary. When correction is necessary, the process proceeds to step S4 where the correction request flag, which indicates that correction is in process, is turned on. Then, in step S5, it is determined whether the type of the port B3 is the first type. When the type of the port B3 is the first type, the process proceeds to step S6 where a threshold-value process 1 is performed, and then the process is completed. When the type of the port B3 is the second type, the process proceeds to step S7 where a threshold-value process 2 is performed, and then the process is completed. The threshold-value processes are described below.

The extended primitive signal is used as correction request data to be sent to the port A2. In the case of one-to-one connection, correction request data is sent to a connected communication partner. In the case of a loop topology, the port A2 on the sending side is specified by setting the address of an upstream device on the data flow in AL_PD in the primitive signal. The address of the port B3 is set in AL_PS. The address of the upstream device can be obtained from information obtained when the loop is initialized. Thus, the obtained address of the upstream device is stored and used.

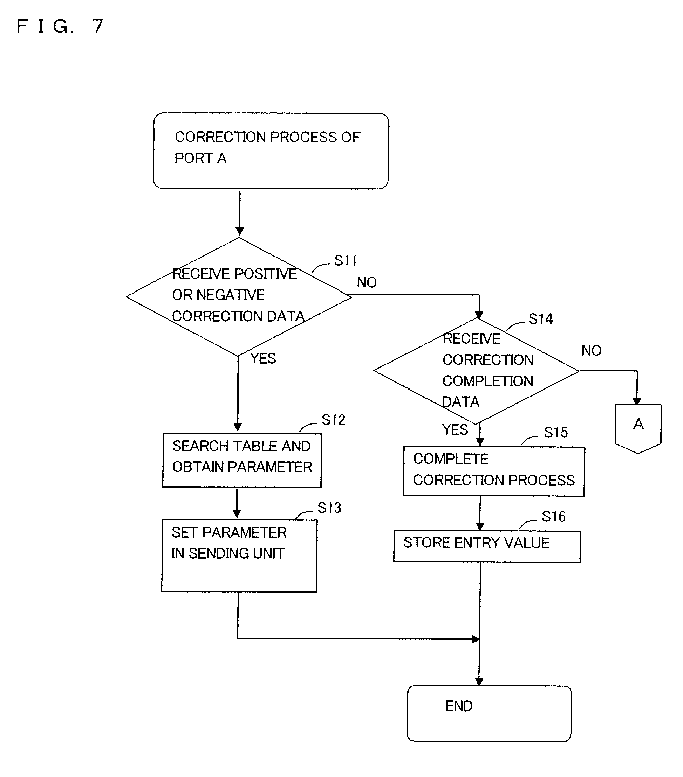

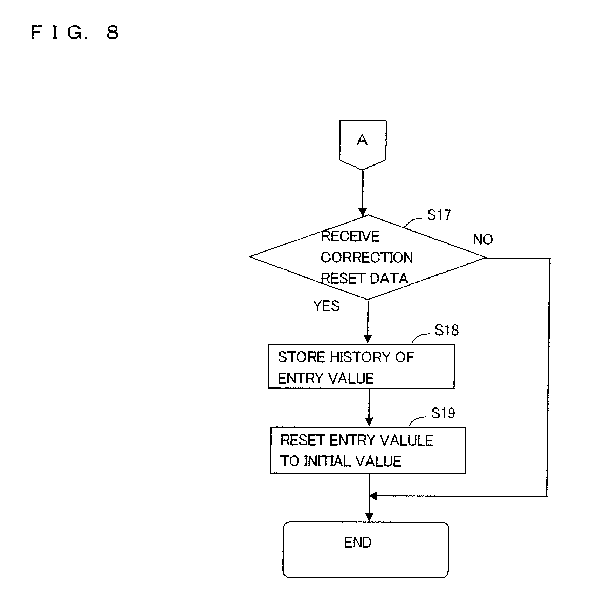

Fig. 7 is a flowchart of a first half of a correction process in the port A2. In step S11, the port A2 checks whether the port A2 has received positive correction data or negative correction data in correction request data. When positive correction data or negative correction data is found to exist as a result of the check, the process proceeds to step S12 where the setting unit 22 searches the table in the memory 23 on the basis of an entry value in the correction request data and obtains parameters for changing the output characteristics. Then, in step S13, the setting unit 22 sets the obtained parameters in the sending unit 12 to change the output characteristics. Then, the process is completed. On the other hand, when positive correction data or negative correction data does not exist, the process proceeds to step S14 where the port A2 checks whether the port A2 has received correction completion data. When the port A2 has not received correction completion data, the process proceeds to step S17 in Fig. 8. On the other hand, when the port A2 has received correction completion data, the process proceeds to step S15 where the port A2 completes the correction process. Then, in step S16, the port A2 stores the entry value at the time of completing the correction as the optimum value.

Fig. 8 is a flowchart of a second half of the correction process in the port A2. In step S17, the port A2 checks whether the port A2 has received correction reset data. When the port A2 has not received correction reset data, the process is completed. When the port A2 has received correction reset data, the process proceeds to step S18 where a history of the entry value is stored. Then, in step S19, the entry value is reset to the initial value. When the correction process has been successfully completed, the port A2 stores the entry value as the optimum value in the memory 23 in this way. Then, when the power is turned on next time after the power is turned off, the setup value that is the optimum value is used. This is because the port A2 is intended to start the operation with the optimum value, assuming that the device is used in the same system.

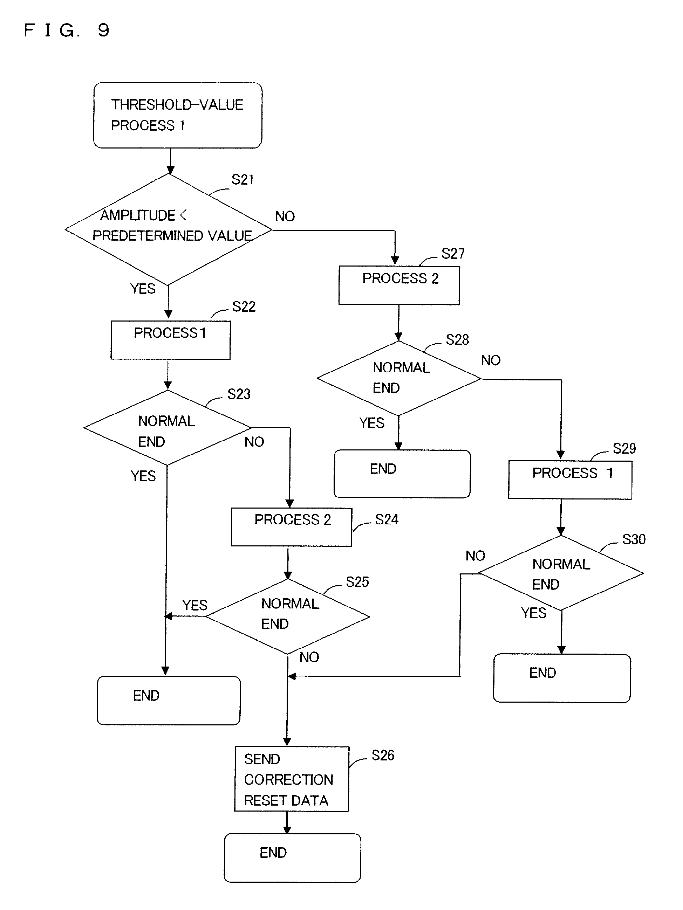

Fig. 9 is a flowchart of the threshold-value process 1. The description is given, assuming that the setup values are set to the initial values shown in Fig. 3. In step S21, it is determined whether the amplitude of a receive signal is less than a predetermined value. When the amplitude of the receive signal is less than the predetermined value, the process proceeds to step S22 where a process 1 is performed. In the process 1, the direction of correction of the setup values is changed to the positive correction direction. Then, in step S23, it is determined whether the result of the process 1 is normal. When the result of the process 1 is normal, the process is completed. In contrast, when the result of the process 1 is not normal, the process proceeds to step S24 where a process 2 is performed. In the process 2, the direction of correction of the setup values is changed to the negative correction direction. Then, in step S25, it is determined whether the result of the process 2 is normal. When the result of the process 2 is normal, the process is completed. In contrast, the result of the process 2 is not normal, the process proceeds to step S26 where correction reset data is sent. At this time, the correction request flag is also turned off. This is because, since appropriate values cannot be achieved by the correction, the entry value of the table needs to be reset to the initial value. When the amplitude of the receive signal is equal to or more than the predetermined value, the process proceeds to step S27 where the process 2 is performed. Then, in step S28, it is determined whether the result of the process 2 is normal. When the result of the process 2 is normal, the process is completed. In contrast, when the result of the process 2 is not normal, the process proceeds to step S29 where the process 1 is performed. Then, in step S30, it is determined whether the result of the process 1 is normal. When the result of the process 1 is normal, the process is completed. In contrast, when the result of the process 1 is not normal, the process proceeds to step S26 where correction reset data is sent. In a normal case, since a table that covers a sufficient range is provided, abnormal end rarely occurs. Thus, correction reset data is also rarely sent. However, in a case where the setup value of the output characteristics of the sending unit 12 in the port A2 is reset to the initial value by sending correction reset data and correction is performed again, when correction reset data is sent again, the hardware of the interface may deteriorate. Thus, the port A2 or the port B3 may have a function of calling maintenance personnel.

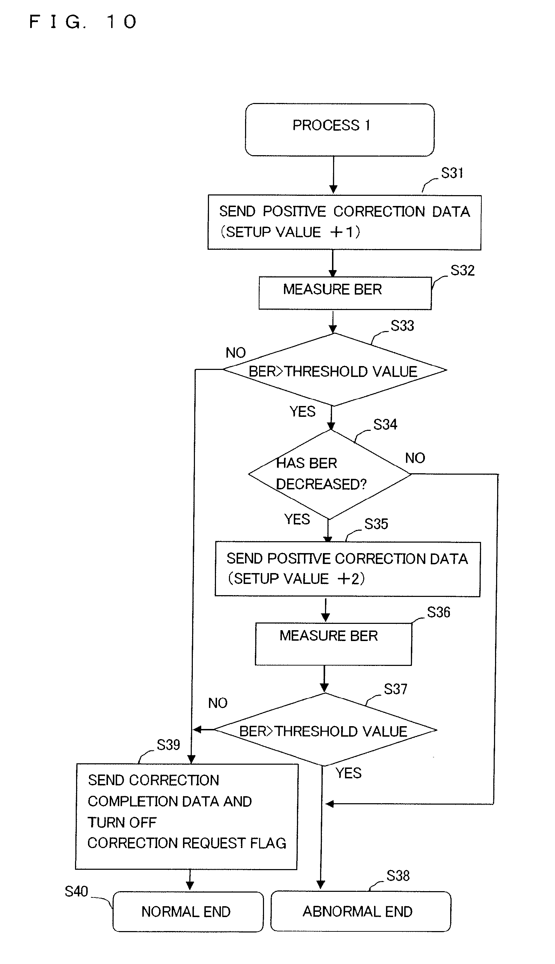

Fig. 10 is a flowchart of the process 1. In step S31, correction request data for positive correction (the setup value + 1) is sent. Then, in step S32, after the correction request data is sent, the BER of received frame data is measured. Then, in step S33, it is determined whether the BER exceeds a threshold value. When the BER is less than the threshold value, it is determined that the correction has been successfully completed, and the process proceeds to step S39. In step S39, correction request data for completing the correction is sent, and the correction request flag is turned off. Then, in step S40, the process is normally completed. On the other hand, when the BER is equal to or more than the threshold value, the process proceeds to step S34 where it is determined whether the BER has decreased. When the BER has not decreased, in step S38, the process is abnormally terminated. When the BER has decreased, the process proceeds to step S35 where correction request data for positive correction (the setup value + 2) is sent. Then, in step S36, after the correction request data is sent, the BER of received frame data is measured. Then, in step S37, it is determined whether the BER exceeds the threshold value. When the BER exceeds the threshold value, in step S38, the process is abnormally terminated. When the BER is less than the threshold value, the process proceeds to step S39, and then in step S40, the process is normally completed.

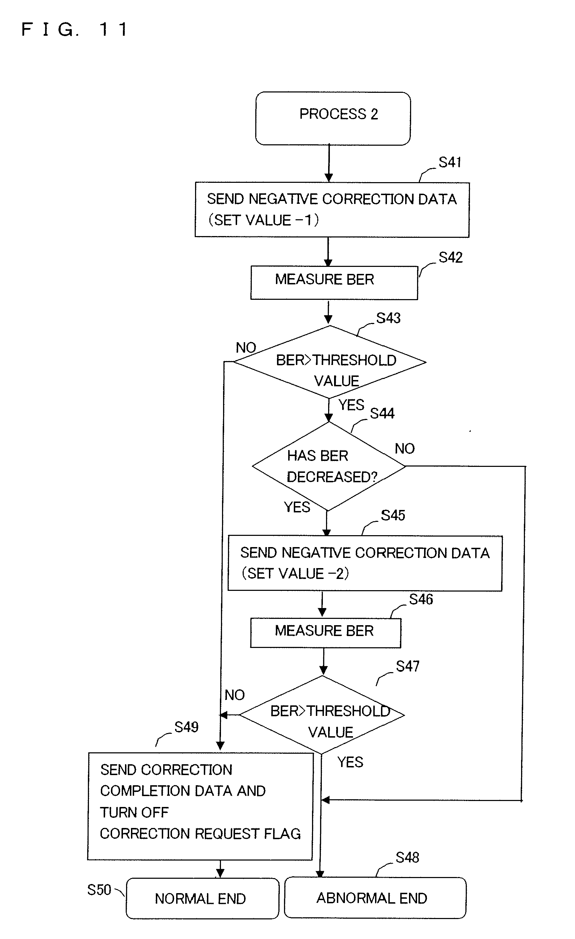

Fig. 11 is a flowchart of the process 2. In step S41, correction request data for negative correction (the setup value - 1) is sent. Then, in step S42, after the correction request data is sent, the BER of received frame data is measured. Then, in step S43, it is determined whether the BER exceeds the threshold value. When the BER is less than the threshold value, it is determined that the correction has been successfully completed, and the process proceeds to step S49. In step S49, correction request data for completing the correction is sent, and the correction request flag is turned off. Then, in step S50, the process is normally completed. On the other hand, when the BER is equal to or more than the threshold value, the process proceeds to step S44 where it is determined whether the BER has decreased. When the BER has not decreased, in step S48, the process is abnormally terminated. When the BER has decreased, the process proceeds to step S45 where correction request data for negative correction (the setup value - 2) is sent. Then, in step S46, after the correction request data is sent, the BER of received frame data is measured. Then, in step S47, it is determined whether the BER exceeds the threshold value. When the BER exceeds the threshold value, in step S48, the process is abnormally terminated. When the BER is less than the threshold value, it is determined that the correction has been successfully completed, and the process proceeds to step S49, and then in step S50, the process is normally completed.

The object of this method is to reduce the BER by changing the output characteristics. In this case, it is assumed that the signal quality is changed by reducing the BER so that the operation can be continued. However, in the worst case, the communication may be disconnected due to the correction. In this case, after predetermined time has elapsed, the port B3 on the receiving side sends a correction request signal for correction reset to the port A2 on the sending side to reset the output characteristics of the sending unit 12 to the initial values and then restart the communication.

An embodiment will now be described, in which the port B3 only has a function of measuring an amplitude and does not have a BER measuring function.

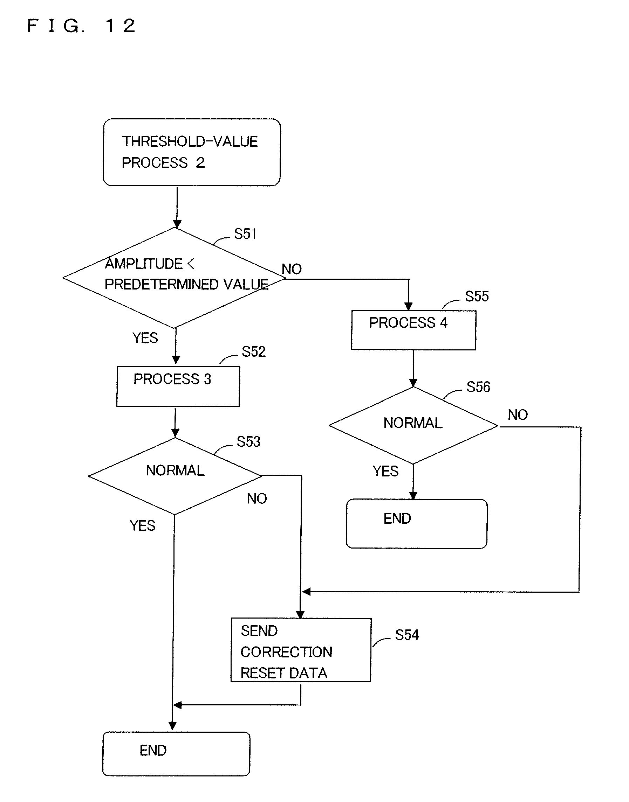

Fig. 12 is a flowchart of the threshold-value process 2. The description is given, assuming that the setup values are set to the initial values shown in Fig. 3. In step S51, it is determined whether the amplitude of a receive signal is less than a predetermined value. When the amplitude of the receive signal is less than the predetermined value, the process proceeds to step S52 where a process 3 is performed. Then, in step S53, it is determined whether the result of the process 3 is normal. When the result of the process 3 is normal, the process is completed. In contrast, when the result of the process 3 is not normal, the process proceeds to step S54 where correction reset data is sent. At this time, the correction request flag is also turned off. The frequency of abnormal end can be reduced by providing sufficient parameters in the table in advance. When the amplitude of the receive signal is more than the predetermined value, the process proceeds to step S55 where a process 4 is performed. Then, in step S56, it is determined whether the result of the process 4 is normal. When the result of the process 4 is normal, the process is completed. In contrast, when the result of the process 4 is not normal, the process proceeds to step S54 where correction reset data is sent. In a normal case, since a table that covers a sufficient range is provided, abnormal end rarely occurs. Thus, correction reset data is also rarely sent. However, in a case where the setup value of the output characteristics of the sending unit 12 in the port A2 is reset to the initial value by sending correction reset data and correction is performed again, when correction reset data is sent again, a hardware failure of the interface or the like may occur. Thus, the port A2 or the port B3 may have a function of calling maintenance personnel.

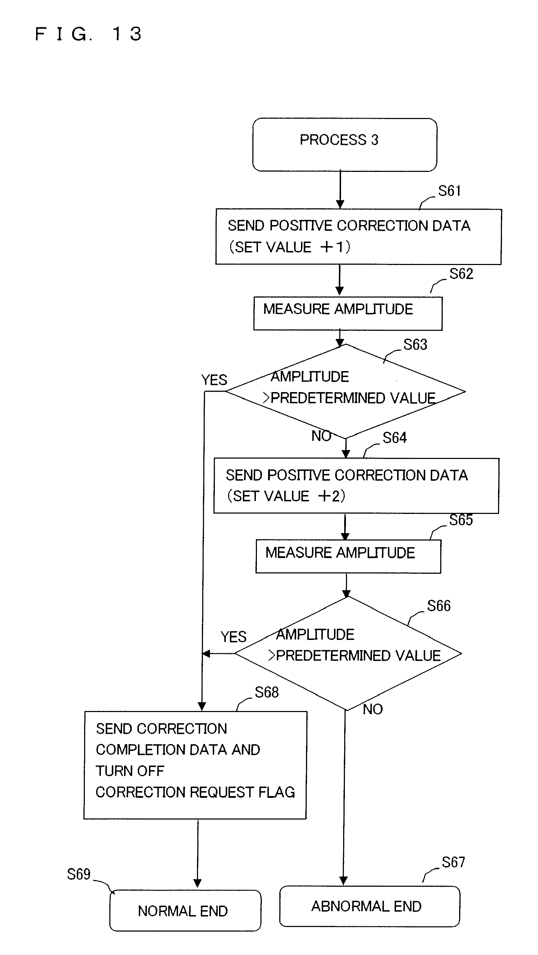

Fig. 13 is a flowchart of the process 3. In step S61, correction request data for positive correction (the setup value + 1) is sent. Then, in step S62, after the correction request data is sent, the amplitude of received frame data is measured. Then, in step S63, it is determined whether the amplitude exceeds a predetermined value. When the amplitude exceeds the predetermined value, it is determined that the correction has been successfully completed, and the process proceeds to step S68. In step S68, correction request data for completing the correction is sent, and the correction request flag is turned off. Then, in step S69, the process is normally completed. On the other hand, when the amplitude is equal to or less than the predetermined value, the process proceeds to step S64 where correction request data for positive correction (the setup value + 2) is sent. Then, in step S65, after the correction request data is sent, the amplitude of received frame data is measured. Then, in step S66, it is determined whether the amplitude exceeds the predetermined value. When the amplitude is equal to or less than the predetermined value, in step S67, the process is abnormally terminated. When the amplitude exceeds the predetermined value, it is determined that the correction has been successfully completed, and the process proceeds to step S68. In step S68, correction request data for completing the correction is sent, and the correction request flag is turned off. Then, in step S69, the process is normally completed.

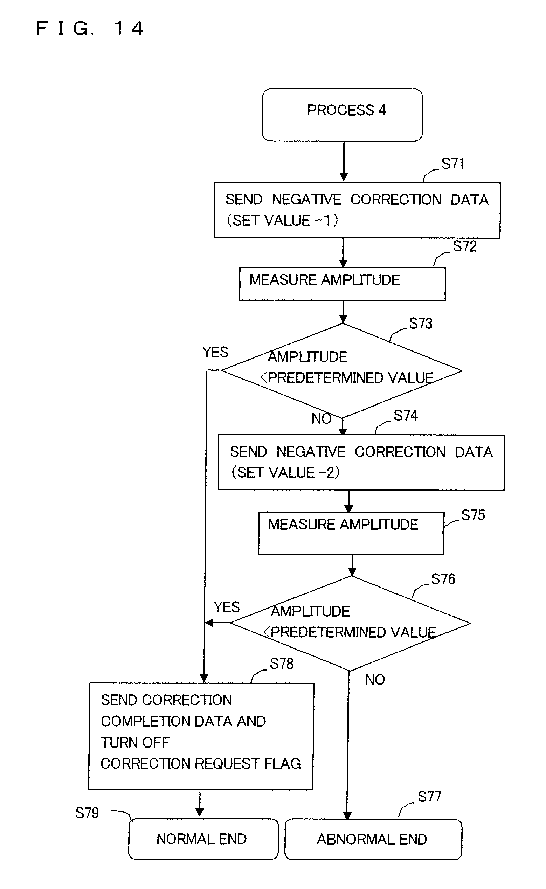

Fig. 14 is a flowchart of the process 4. In step S71, correction request data for negative correction (the setup value - 1) is sent. Then, in step S72, after the correction request data is sent, the amplitude of received frame data is measured. Then, in step S73, it is determined whether the amplitude is less than the predetermined value. When the amplitude is equal to or less than the predetermined value, it is determined that the correction has been successfully completed, and the process proceeds to step S78. In step S78, correction request data for completing the correction is sent, and the correction request flag is turned off. Then, in step S79, the process is normally completed. On the other hand, when the amplitude is equal to or more than the predetermined value, the process proceeds to step S74 where correction request data for negative correction (the setup value - 2) is sent. Then, in step S75, after the correction request data is sent, the amplitude of received frame data is measured. Then, in step S76, it is determined whether the amplitude is less than the predetermined value. When the amplitude is equal to or more than the predetermined value, in step S77, the process is abnormally terminated. When the amplitude is less than the predetermined value, it is determined that the correction has been successfully completed, and the process proceeds to step S78, and then, in step S79, the process is normally completed.

The object of this method is to improve the amplitude by changing the output characteristics. In this case, it is assumed that the signal quality is changed by improving the amplitude so that the operation can be continued. However, in the worst case, the communication may be disconnected due to the correction. In this case, after predetermined time has elapsed, the port B3 on the receiving side sends a correction request signal for correction reset to the port A2 on the sending side to reset the output characteristics of the sending unit 12 to the initial values and then restart the communication.

When a device that includes the port A2 or the port B3 is moved into another system, the recorded setup value is not necessarily the optimum value. Even in this case, since correction is performed automatically, mismatch in electrical characteristics can be corrected separately in each transmission system. As a result, the overall operation of the serial transmission system can be optimized, and the occurrence of errors can be minimized. In the forgoing description, the case of one-to-one connection was mainly described. However, even in a loop connection and a fabric connection, operations are similar to the operation described above.

Moreover, for example, the receiving unit 13 in the port B3 may have a function of changing the characteristics of an equalizer. The correction-request-data generating unit 27 has a function of setting up the receiving unit 13 for changing the characteristics of the equalizer. Then, when positive correction data is sent to the port A2 on the basis of the result of measurement of the signal quality, the correction-request-data generating unit 27 sets up the equalizer so as to increase the gain of high frequencies that are expected to be attenuated. In the case of negative correction data, the correction-request-data generating unit 27 sets up the equalizer so as to decrease the gain of high frequencies that are expected to be attenuated.

Moreover, in a connection mode in which the port A2 and the port B3 oppose each other in one-to-one correspondence, when the ports are connected to each other, for example, upon turning on the power and when a communication partner is identified and it is detected that the combinations of devices have not been changed, setup values that have been automatically adjusted and are stored in the memory 23 may be used as the output characteristics of the sending unit 12. Identification of a communication partner is performed by storing a source address in frame data in the memory 23 upon receiving the frame data and checking whether the source address has been changed every time frame data is received.

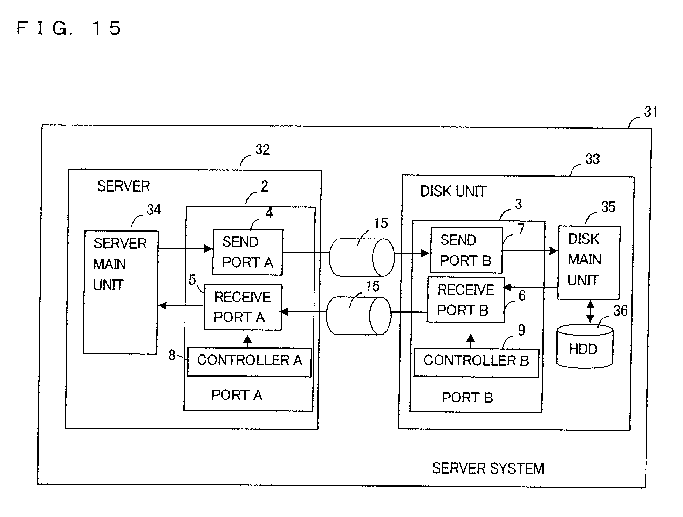

A server system 31 that includes the serial transmission system 1 will now be described. Fig. 15 is a block diagram of the server system 31. Fig. 15 shows an example of the server system 31, in which a server 32 and a disk unit 33 are connected in one-to-one correspondence. The server 32 includes a server main unit 34 and the port A2. The server main unit 34 sends and receives data to and from the disk unit 33 via the port A2. The port A2 is a fibre channel control unit that controls data transfer to and from the transmission path 15 according to the Fibre Channel standard. The transmission path 15 is, for example, a coaxial cable. Write data from the server 32 is sent to the disk unit 33 in the form of electrical signals. The disk unit 33 includes the port B3, a disk main unit 35, and a hard disk drive (HDD) 36. The port B3 is a fibre channel control unit that controls data transfer to and from the transmission path 15 according to the Fibre Channel standard. The disk main unit 35 sends and receives data to and from the server 32 via the port B3. The disk main unit 35 further writes and reads data to and from the HDD 36.

The operation of the server system 31 is as follows: When the disk unit 33 receives write data from the server 32, the disk unit 33 writes the write data to the HDD 36. On the other hand, when the disk unit 33 receives a read command from the server 32, the disk unit 33 reads data from the HDD 36 and sends the data to the server 32.

While transmission systems are operating, the transmission systems can be comprehensively optimized, as shown in an embodiment, by monitoring the quality of receive signals and correcting the operational configuration of a sending side. Thus, the occurrence of errors in a serial transmission system is minimized. In an environment in which devices are installed and operating, since matching of transmission systems is automatically optimized while the transmission systems are operating, the transmission systems can be comprehensively optimized without manual operation. As a result, while a serial transmission system is operating, the number of errors gradually decreases, thereby improving the reliability of the serial transmission system.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A serial transmission system for transferring serial data via a transmission path, the serial transmission system comprising a first port and a second port,
the first port including
a first receiving unit for receiving data,
a signal-quality measuring unit for measuring signal quality of the received data,
a correction-request-data generating unit for generating correction request data for correcting output characteristics of the second port on the basis of a result of the measurement, and
a first sending unit for sending the generated correction request data; and
the second port including
a second sending unit for sending data,
a second receiving unit for receiving the correction request data from the first port, and
a setting unit for setting output characteristics of the second sending unit on the basis of the received correction request data.

2. The serial transmission system according to Claim 1, wherein, when a bit error rate of a received signal exceeds a predetermined value, the correction-request-data generating unit generates the correction request data for changing an output amplitude of the second sending unit.

3. The serial transmission system according to Claim 1, wherein, when a bit error rate of a received signal exceeds a predetermined value, the correction-request-data generating unit generates the correction request data for changing an output amplitude of the second sending unit and changing preemphasis of the second sending unit.

4. The serial transmission system according to any of the preceding claims, wherein, when an amplitude of a received signal exceeds a predetermined value, the correction-request-data generating unit generates the correction request data for decreasing an output amplitude of the second sending unit.

5. The serial transmission system according to any of the preceding claims, wherein, when an amplitude of the received signal is less than a predetermined value, the correction-request-data generating unit generates the correction request data for increasing an output amplitude of the second sending unit.

6. The serial transmission system according to any of the preceding claims, wherein the first port includes a changing unit that changes settings of an equalizer in the first receiving unit on the basis of a result of the measurement of the signal quality.

7. The serial transmission system according to any of the preceding claims, further comprising a memory that stores a table that retains correspondences between the correction request data and setting data of output characteristics of the second sending unit in advance.

8. A port for sending / receiving data to / from another port via a transmission path, the port comprising:
a receiving unit for receiving data from the other port;
a signal-quality measuring unit for measuring signal quality of the received data;
a correction-request-data generating unit for generating a correction request data on the basis of a result of the measurement;
a sending unit for sending data to the other port; and
a setting unit for setting output characteristics of the sending unit on the basis of the correction request data received from the other port.

9. An opposed serial transmission system comprising a pair of ports, each of the pair of ports having a sending unit and a receiving unit, the pair of ports opposing and being connected so that a signal from the sending unit of each of the pair of ports is received by the receiving unit of the other port:
the each of the pair of ports including
a signal-quality measuring unit for measuring signal quality of the signal received by the receiving unit,
a correction-request-signal generating unit for generating, on the basis of a result of the measurement, a correction request signal being encoded content of correction of output characteristics of the sending unit of the other one of the pair of ports,
a correction-request-signal sending unit for sending the generated correction request signal from the sending unit to the other one of the pair of ports, and
means for changing settings of the sending unit on the basis of a correction request signal upon receiving unit receiving the correction request signal from the other one of the pair of ports.

10. The opposed serial transmission system according to Claim 9, wherein each of the pair of ports includes a memory that stores settings of output characteristics of the sending unit for which the signal quality of the signal received by the receiving unit is automatically adjusted, and, when a power is turned on, each of the pair of ports obtains the settings stored in the memory and sets the output characteristics.

11. The opposed serial transmission system according to Claim 9 or 10, wherein each of the pair of ports includes a memory that stores settings of output characteristics of the sending unit for which the signal quality of the signal received by the receiving unit is automatically adjusted, and, when the pair of ports are connected to each other and when each of the pair of ports identifies the other port and detects that combinations of devices have not been changed, each of the pair of ports sets the output characteristics of the sending unit using values stored in the memory.

12. A loop serial transmission system comprising a plurality of ports in a loop, each of the ports having a sending unit and a receiving unit, each of the ports being connected in the loop so that a signal from the sending unit of each of the ports is received by the receiving unit of the port next to the port sending the signal:
the each of the ports including
a signal-quality measuring unit for measuring signal quality of the signal received by the receiving unit,
a correction-request-signal generating unit for generating, on the basis of a result of the measurement, a correction request signal being encoded content of correction of output characteristics of the sending unit of the port sending the received signal and being embedded a port address of the port sending the received signal,
a correction-request-signal sending unit for sending the generated correction request signal from the sending unit to the port sending the received signal , and
means for changing settings of the sending unit on the basis of a correction request signal upon the receiving unit receiving the correction request signal.

13. The loop serial transmission system according to Claim 12, wherein each of the ports includes a memory that stores settings of output characteristics of the sending unit for which the received signal quality is automatically adjusted, and, when a power is turned on, each of the ports obtains the settings stored in the memory and sets the output characteristics of the sending unit.

14. A method for automatically correcting signal quality of a serial transmission system in which data is transferred between a first port and a second port via a transmission path, the method comprising:
sending data to the first port from the second port;
measuring signal quality of the data received from the second port in the first port;
generating correction request data for correcting output characteristics of the second port on the basis of a result of the measurement in the first port;
sending the generated correction request data to the second port from the first port;
receiving, in the second port, the correction request data from the first port; and
changing , in the second port, settings of output characteristics for sending data on the basis of the received correction request data.
